Europäisches Patentamt

European Patent Office

Office européen des brevets

(19)

(11) Numéro de publication : **0 015 353**
**B1**

(12) **FASCICULE DE BREVET EUROPÉEN**

(45) Date de publication du fascicule du brevet :
02.05.84

(51) Int. Cl.³ : **B 23 P   1/12, F 16 C 11/12**

(21) Numéro de dépôt : **79401047.0**

(22) Date de dépôt : **20.12.79**

(54) **Procédé de fabrication par électro-érosion de lames flexibles de suspension présentant une partie mince, permettant d'éliminer les erreurs de positionnement.**

(30) Priorité : **11.01.79 FR 7900601**

(43) Date de publication de la demande :
**17.09.80 Bulletin 80/19**

(45) Mention de la délivrance du brevet :
**02.05.84 Bulletin 84/18**

(84) Etats contractants désignés :
**BE DE IT SE**

(56) Documents cités :
**DE-A- 2 153 135**
**FR-A- 2 153 509**
**US-A- 3 290 949**

(73) Titulaire : **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay (FR)**

(72) Inventeur : **Schilling, Frantz**
**31, avenue des Bois**
**F-78470 Saint Remy Les Chevreuse (FR)**

(74) Mandataire : **Jolly, Jean-Pierre et al**
**Cabinet BROT et JOLLY 83, rue d'Amsterdam**
**F-75008 Paris (FR)**

# Procédé de fabrication par électro-érosion de lames flexibles de suspension présentant une partie mince, permettant d'éliminer les erreurs de positionnement

La présente invention a pour objet un procédé d'élimination des erreurs de positionnement de pièces usinées en place par électro-érosion.

Plus particulièrement, la présente invention a pour objet un procédé d'obtention de lames flexibles et/ou élastiques de suspension présentant une partie linéaire extrêmement mince.

Sur un accéléromètre à pendule, une paire de ces lames précitées peuvent matérialiser une suspension élastique à deux degrés de liberté à condition que leurs axes soient concourants, et ainsi de suite.

Une difficulté industrielle de réalisation de ces pièces réside dans la maîtrise d'obtention de cette partie linéaire fine, d'épaisseur de quelques microns.

Une autre difficulté réside dans l'obtention d'un équipage ou paire de tiges dont les parties linéaires précitées sont parfaitement alignées, c'est-à-dire dans le prolongement l'une de l'autre et/ou parallèles à un plan préalablement défini.

Or, dans la pratique, s'il est possible d'assurer un tel alignement avec une erreur cumulée de positionnement, il est extrêmement difficile de l'avoir de façon répétitive en supprimant ladite erreur. On risque, en effet, de faire naître un mésalignement, source de contraintes mécaniques indésirables.

C'est ainsi qu'il est notamment connu, par le brevet allemand 2 153 135, de réaliser un amincissement d'une tige par usinage des deux côtés par électro-érosion.

De plus, on sait aussi qu'il est connu, notamment par le brevet français 2 153 509, un dispositif de suspension à au moins deux charnières constituées par deux tiges amincies de part et d'autre pour réaliser une partie souple pouvant constituer charnière.

Aussi, dans certains domaines de très haute technicité, il est absolument nécessaire que la précision de positionnement de ces deux charnières soit parfaitement définie, et surtout que les axes de rotation de celles-ci soient parfaitement confondus.

La présente invention a pour but de mettre en œuvre un procédé permettant de réaliser au moins une charnière à deux tiges comportant une partie amincie dont les axes de rotation sont parfaitement alignés.

Plus précisément, la présente invention a pour objet un procédé d'obtention de lames flexibles de suspension par amincissement de la partie centrale d'au moins deux tiges dont une extrémité est solidaire d'un bâti, et dont l'autre extrémité est solidaire d'une pièce mobile, caractérisé en ce qu'il consiste à amincir par électro-érosion, à l'aide d'une électrode cylindrique de diamètre approprié successivement, un côté puis l'autre, simultanément de la partie centrale des deux tiges lorsque ces deux tiges sont en place sur le bâti de façon à réaliser deux arcs de cercle opposés et alignés par leurs sommets, simultanément sur les deux dites tiges, et à répéter cette pénétration progressive symétrique jusqu'à l'obtention d'une ligne d'épaisseur désirée, l'alignement desdits sommets étant assuré par le fait que le bâti présente au moins un plan de référence servant d'appui repère ou de guidage à l'électrode précitée.

Le procédé d'usinage en ébauche et en finition, par l'électro-érosion des parties fines sur des pièces en place, selon l'invention supprime l'ensemble des inconvénients précités et permet l'élimination des erreurs de positionnement de façon industrielle.

De plus, les charnières souples des dispositifs précités sont obtenues selon le procédé au cours de la dernière opération. Ce qui supprime toute opération mécanique ultérieure, c'est-à-dire un risque non négligeable de dégradation. Compte tenu de la fragilité et du coût élevé des pièces en cause, cela constitue un avantage industriel considérable et pas tellement évident au départ.

Un mode préféré de réalisation de lames flexibles et/ou élastiques selon l'invention consiste dans l'obtention d'une masse pendulaire suspendue par deux tiges à un bâti en forme de potence, comme c'est le cas pour accéléromètre à un degré de liberté.

Une variante de réalisation consiste dans l'obtention d'une suspension élastique d'un gyroscope à deux degrés de liberté, à l'aide de deux paires de lames flexibles, dont les axes d'articulation sont perpendiculaires entre eux.

Ces modes de réalisation, donnés à titre d'exemple non limitatif, seront maintenant décrits avec référence aux dessins annexés, dans lesquels :

les figures 1 et 2 montrent une vue de côté et de dessus, un équipage pendulaire à un degré de liberté, réalisé par le procédé selon l'invention, la figure 3 est une vue en perspective de l'équipage représentée sur les figures 1 et 2. Cette figure met en évidence l'aspect linéaire de la partie 5 d'épaisseur minimale ; en même temps que l'axe charnière XX',

la figure 4 montre une tige pleine 2a avant l'usinage de sa partie centrale ; et la même tige après usinage 2b, avec leur coupe transversale suivant ZZ',

les figures 5 et 6 montrent, vue de dessus et en coupe, suivant CD, une suspension élastique d'un gyroscope à deux degrés de liberté résultant de l'utilisation du procédé selon l'invention.

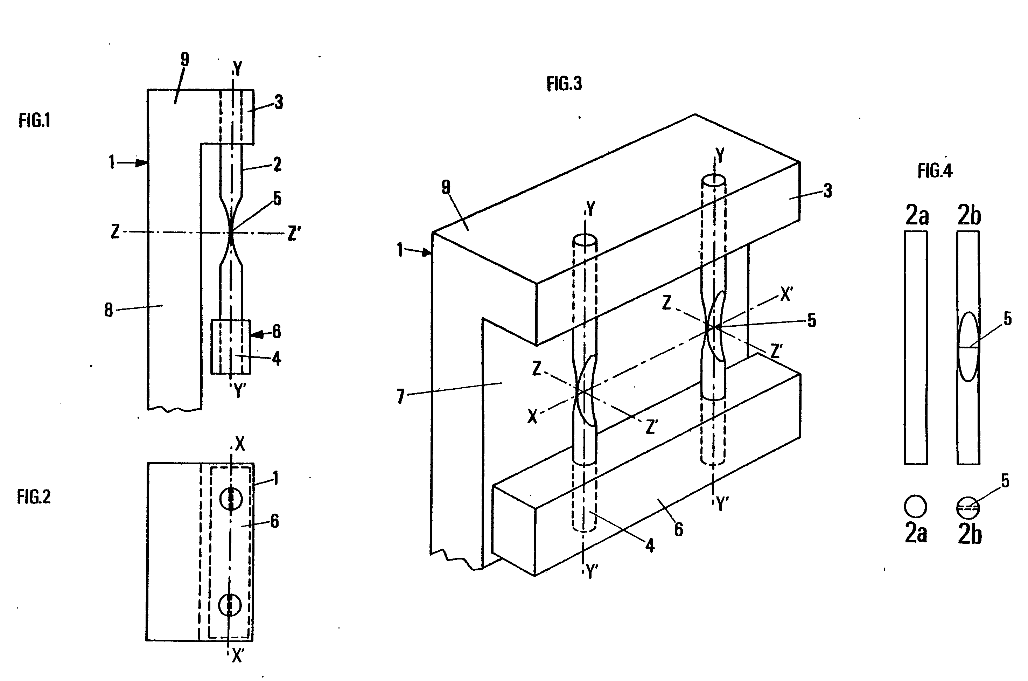

Les figures 1 et 4 considérées en combinaison mettent bien en évidence ;

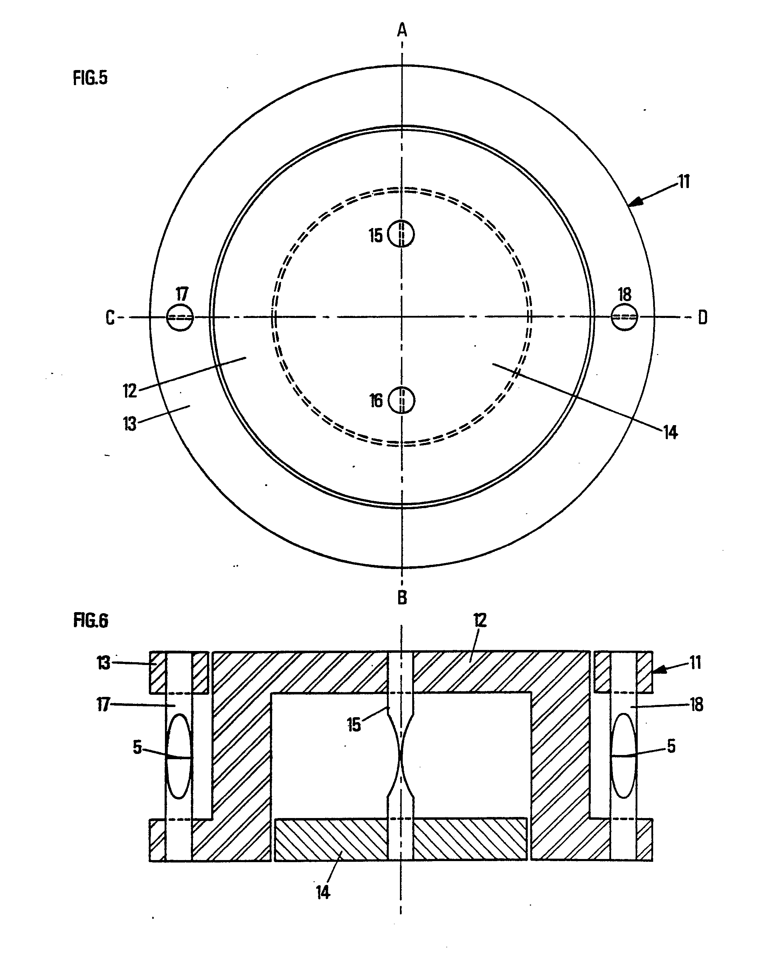

— le mode d'obtention de la partie linéaire mince par usinage par électro-érosion d'un côté, puis de l'autre côté de la tige, réalisant deux arcs de cercle opposés par leur sommet, dont le rapprochement progressif permet d'atteindre la minceur optimale ; l'axe XX' formant charnière dans le plan XY (figure 3),

— le bâti support avec ses plans de référence ou plans de pose respectivement vertical 8 et horizontal 9 ; ces plans de pose assurent le parallélisme et l'alignement imposés des fines charnières dont l'épaisseur peut atteindre quelques microns si nécessaire.

La suspension élastique, à deux degrés de liberté, illustrée sur les figures 5 et 6, met en évidence la généralité d'application du procédé.

Dans l'exemple de la figure 4, la tige est de section cylindrique. Il est évident que cette section pourrait être carrée, rectangulaire ou polygonale, à nombre pair de faces sans sortir du cadre de la présente invention.

La suspension élastique accordée de gyroscope 11, représentée sur les figures 5 et 6, montre trois éléments annulaires ; un élément central (12) et deux éléments raccordés, un externe (13) et un interne (14), reliés entre eux, deux à deux 13 avec 12, et 14 avec 12 à l'aide de deux tiges respectivement 17 et 18 pour les éléments annulaires 12 et 13, et 15 et 16 pour les éléments annulaires (12 et 14).

La position concourante favorable, mais pas obligatoire, des axes CD et AB desdites tiges est bien mise en évidence sur ces figures.

Le positionnement préalable des tiges, reliant entre elles un élément fixe et un élément mobile, s'opère d'une façon connue en soi.

Dans le cas du pendule (figure 3), on alèse simultanément deux trous verticaux parallèles dans la masse 6 du pendule et la partie correspondante 3 du bâti en forme de potence ; trous destinés à recevoir les extrêmités des deux tiges pleines 2a ; ou ébauchées.

Dans le cas de la suspension élastique, accordée d'un gyroscope à deux degrés de liberté, l'alignement des trous dans le prolongement les uns des autres, entre les éléments devant être raccordés deux à deux, se fait aussi d'une façon connue en soi.

Le procédé selon l'invention est de portée générale, ce qui lui confère un intérêt supplémentaire.

## Revendication

Procédé d'obtention de lames flexibles de suspension par amincissement de la partie centrale d'au moins deux tiges dont une extrémité est solidaire d'un bâti (1), et dont l'autre extrémité est solidaire d'une pièce mobile (6), caractérisé en ce qu'il consiste à amincir par électro-érosion à l'aide d'une électrode cylindrique de diamètre approprié successivement, un côté puis l'autre, simultanément de la partie centrale des deux tiges (5) lorsque ces deux tiges sont en place sur le bâti (1) de façon à réaliser deux arcs de cercle opposés et alignés par leurs sommets, simultanément sur les deux dites tiges, et à répéter cette pénétration progressive symétrique jusqu'à l'obtention d'une ligne d'épaisseur désirée, l'alignement desdits sommets étant assuré par le fait que le bâti (1) présente au moins un plan de référence (3) (ou 8) servant d'appui ou de guidage à l'électrode précitée.

## Claim

A process for obtaining flexible suspension blades by thinning down the central part of at least two rods one end of which is integral with a frame (1), and the other end of which is integral with a mobile part (6), characterized in that it consists in thinning down by electro-erosion by means of a cylindrical electrode of appropriate diameter successively, one side then the other, simultaneously the central part of the two rods (5) when these two rods are in position on the frame (1) so as to form two opposite arcs of a circle aligned by their apexe, simultaneously on said two rods, and in repeating this symmetrical progressive penetration until a line of desired thickness is obtained, the alignment of said apexes being provided by the fact that the frame (1) has at least one reference plane (3) (or 8) serving as reference or guide support for the above-mentioned electrode.

## Anspruch

Verfahren zur Herstellung von biegsamen Aufhängungs-Blattfedern durch Verdünnen des zentralen Teiles von wenigstens zwei Stangen, deren eines Ende fest mit einem Aufbau (1) verbunden ist und deren anderes Ende fest mit einem beweglichen Teil (6) verbunden ist, dadurch gekennzeichnet, daß es darin besteht, mittels einer zylindrischen Elektrode geeigneten Durchmessers nacheinander die eine und dann die andere Seite des zentralen Teiles der zwei Stangen (5), während diese an dem Aufbau (1) in Stellung gebracht sind, derart durch Elektroerosion gleichzeitig zu verdünnen, daß zwei einander gegenüberliegende Kreisbögen, deren Scheitel miteinander fluchten, gleichzeitig an den beiden Stangen gebildet werden, und dieses progressive und symmetrische Herausarbeiten wiederholt wird, bis eine Linie der gewünschten Dicke erhalten ist, wobei die Ausrichtung der genannten Scheitel durch die Tatsache gewährleistet ist, daß der Aufbau (1) wenigstens eine Bezugsebene (3) (oder 8) aufweist, welche als Abstützmarke oder Führung für die genannte Elektrode dient.

FIG.1

9

Y

3

1

2

5

Z ——————— Z'

8

6

4

'Y'

FIG.2

X

1

6

X'

FIG.3

9

Y

Y

3

1

Z

X'

5

Z

Z'

7

X

Z'

4

6

Y'

'Y'

FIG.4

2a    2b

5

0 015 353

5

2a    2b

FIG.5

A

11

15

17    C                    D

18

12

13

14

16

B

FIG.6

12

13                          11

17                          18

5    15                      5

14